# EUROPÄISCHE PATENTSCHRIFT

(11) **EP 1 167 156 B1**
(45) Veröffentlichungstag und Bekanntmachung des Hinweises auf die Patenterteilung: **22.02.2006**
(21) Anmeldenummer: 01115064.6
(22) Anmeldetag: 21.06.2001
(51) Int. Cl.: B62B 3/18, B62B 3/04

(54) **Stapelbarer Einkaufswagen**
Nestable shopping cart
Chariot libre-service emboîtable

(30) Priorität: 23.06.2000 DE 20011117 U
(43) Veröffentlichungstag der Anmeldung: 02.01.2002
(73) Patentinhaber: WANZL METALLWARENFABRIK GMBH, D-89336 Leipheim (DE)
(72) Erfinder: Eberlein, Herbert, 89347 Bubesheim (DE)

(56) Entgegenhaltungen:
- EP-A- 0 254 210
- EP-A- 0 679 562
- EP-A- 0 684 176

## Beschreibung

Die Erfindung betrifft einen stapelbaren Einkaufswagen gemäß dem Oberbegriff des Anspruchs 1.

Zum nächstliegenden Stand der Technik zählt ein Einkaufswagen, der in der EP 0 254 210 B2 näher beschrieben ist. Die bei diesem Wagen vorgesehene Ablage ist zum Abstellen von Getränkekisten geeignet.

Es ist Aufgabe der Erfindung, einen Einkaufswagen der hier vorliegenden Art so weiterzuentwickeln, dass mit ihm auf der Ablage abgestellte Flaschengebinde, die kleiner sind als Getränkekisten, sicher transportiert werden können, dass die Größe der Abstellfläche der Ablage nicht beeinträchtigt wird und dass die Ablage bequem zu handhaben ist.

Die Lösung der Aufgabe erfolgt gemäß dem kennzeichnenden Teil des Anspruchs 1.

Als vorhandenes Mittel wird wenigstens eine Drehfeder vorgeschlagen, die beim Bewegen der Ablage in die Gebrauchslage ein Energiepotential aufbaut, das dann an die ausgeschwenkte Ablage abgegeben wird, wenn man die Ablage loslässt. Die Ablage sucht dann in vorteilhafter Weise sofort und von selbst ihre Nichtgebrauchslage auf.

Als beanspruchbares Mittel wiederum kann man sich der Gravitation bedienen, die dann wirksam wird, wenn die Lage des Schwerpunktes in Bezug zur Schwenkachse so gewählt wird, dass beim Loslassen der in Gebrauchslage befindlichen Ablage, diese sich in zweckmäßiger Weise sofort und ohne fremdes Zutun in ihre Nichtgebrauchslage bewegt. Man kann auch beide Mittel zusammen nutzen. Die vorgeschlagenen Mittel bewirken auch, dass auf der Abstellfläche befindliche Ware, beispielsweise ein oder zwei Flaschengebinde, mehr oder weniger stark gegen die Rückseite des Korbes gedrückt werden, so dass die Ware oder die Flaschengebinde sicher transportiert werden können. Dieser Effekt wird sogar noch verstärkt, wenn auch der Schwerpunkt der auf der Ablage befindlichen Ware zur Schwenkachse der Ablage so platziert ist, dass die Ware durch ihr Eigengewicht bestrebt ist, die Ablage ebenfalls in die Nichtgebrauchslage zu drücken. Die Größe der nutzbaren Abstellfläche bleibt erhalten bzw. sie wird nicht in störender Weise beeinflusst, weil die den Schwenkbereich der Ablage bestimmenden Anschlagmittel außerhalb der Abstellfläche vorgesehen sind.
Die eben geschilderten Vorteile weist der in der EP 0 254 210 B2 beschriebene Einkaufswagen nicht auf.

Die Erfindung wird anhand von Ausführungsbeispielen näher erläutert. Es zeigt
- Fig. 1: in Seitenansicht einen Einkaufswagen mit in Gebrauchslage befindlicher Ablage, auf der sich ein Flaschengebinde befindet sowie
- Fig. 2: ebenfalls in Seitenansicht den gleichen Einkaufswagen mit in Nichtgebrauchslage befindlicher Ablage.

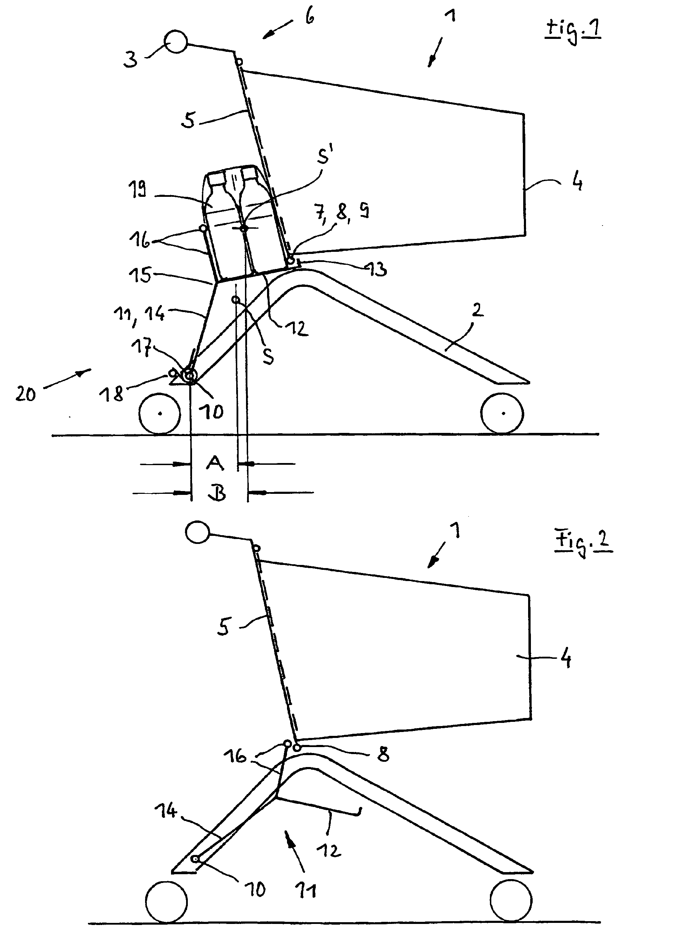

Der in Fig. 1 dargestellte Einkaufswagen 1 weist ein mit Fahrrollen ausgestattetes Fahrgestell 2 auf, das einen Korb 4 zur Aufnahme von Ware trägt. Am oberen hinteren Ende 6 des Korbes 4 befindet sich eine Schiebeeinrichtung 3. Unterhalb der Schiebeeinrichtung 3, also am hinteren Ende 20 des Einkaufswagens 1 ist an diesem eine zum weiteren Abstellen von Ware bestimmte Ablage 11 vorgesehen, die sich um eine horizontale Schwenkachse 10 aus einer Nichtgebrauchslage nach rückwärts in eine Gebrauchslage und wieder zurück bewegen lässt. Der Schwenkbereich der Ablage 11 wird durch Anschlagmittel 8 bestimmt, die sich am Korb 4 und/oder am Fahrgestell 2 befinden. Im Beispiel sind die Anschlagmittel 8 durch zwei nach unten gerichtete Abschnitte 9 des hinteren unteren Korbrandes 7 gebildet. Die Ablage 11 weist eine nach hinten abfallende Abstellfläche 12 auf, die nach hinten durch einen höher gelegenen Anschlag 16 begrenzt wird. Die Schwenkachse 10 für die Ablage 11 ist tiefer angeordnet als die Abstellfläche 12. Die Ablage 11 weist zwei von der Abstellfläche 12 nach unten zur Schwenkachse 10 führende Stützarme 14 auf, die nahe den Längsseiten des Fahrgestelles 2 an diesem angeordnet sind. Die Stützarme 14 sind in der dargestellten Gebrauchslage der Ablage 11 nach vorne geneigt angeordnet. Von den oberen Enden 15 der Stützarme 14 ausgehend erstreckt sich die Abstellfläche 12 schräg ansteigend nach vorne, wobei ein Teil des vorderen Randes 13 der Abstellfläche 12 nach oben gebogen ist und an den beiden Anschlagmitteln 8 anliegt, so dass die Ablage 11 nicht mehr weiter nach rückwärts herausgeschwenkt werden kann. Der Anschlag 16 der Ablage 11 verläuft in etwa parallel zur Rückwand 5 des Korbes 4. Der Einkaufswagen 1 und die Ablage 11 sind in bekannter Weise durch konische Gestaltung, durch die schwenkbare Rückwand 5, durch Einschnitte oder durch Versatz usw. so gestaltet, dass sich gleiche Einkaufswagen 1 in einer Reihe platzsparend gestapelt abstellen lassen. Auf der Ablage 11 befindet sich Ware in Form eines schrumpfverpackten Flaschengebindes, das beispielsweise sechs Literflaschen 19 aufweist, von denen in Seitenansicht zwei sichtbar sind. Mit dem Buchstaben "S" ist der Schwerpunkt der Ablage 11 gekennzeichnet. Der Schwerpunkt S befindet sich höher als die Schwenkachse 10 und ist in einem Abstand A, gemessen von der Schwenkachse 10 in Richtung vorderes Ende 20' des Einkaufswagens 1 angeordnet. In der Zeichnung entwickelt die in Gebrauchslage befindliche Ablage 11, beladen oder unbeladen, aufgrund der Gravitation ein rechtsdrehendes Moment, so dass die in Gebrauchslage befindliche Ablage 11 immer bestrebt ist, von selbst ihre Nichtgebrauchslage aufzusuchen. In der Zeichnung erkennt man, dass die Anschlagmittel 8 außerhalb der Abstellfläche 12 angeordnet sind. Ergänzend ist auch der Schwerpunkt S' der auf der Ablage 11 befindlichen Ware dargestellt. Der Schwerpunkt S' ist höher angeordnet als die Schwenkachse 10 und in einem nach vorne sich erstrekkenden Abstand B zur Schwenkachse 10 vorgesehen. Somit entwickelt die Ware in der Zeichnung ebenfalls ein rechtsdrehendes Moment mit der Folge, dass die auf der Ablage 11 abgestellte Ware gegen die Rückwand 5 des Korbes 4 gedrückt und somit beim Transport durch ihr eigenes Gewicht sicher gehalten wird.
Alternativ hierzu ist auch eine Lösung möglich, bei der wenigstens eine Drehfeder 17 vorgesehen ist, die, nahe an der Schwenkachse 10 angeordnet, mit einem Ende an einem der bewegbaren Stützarme 14 der Ablage 11 und mit ihrem anderen Ende an einem nahe gelegenen, am Fahrgestell 2 befindlichen Fixpunkt 18 verbunden ist, derart, dass beim Verschwenken der Ablage 11 in die Gebrauchslage in der Drehfeder 17 ein Energiepotential aufgebaut wird, das dann auf die ausgeschwenkte Ablage 11 einwirkt, wenn diese wieder losgelassen wird. Dieses Energiepotential bewirkt, dass die ausgeschwenkte Ablage 11 von selbst in ihre Nichtgebrauchslage geschwenkt wird.
Die Erfindung kann sich somit mit zweierlei Mitteln bedienen. Einem ersten Mittel, das als Gravitation wirkend, immer beanspruchbar ist und/oder einem zweiten Mittel, das in Form von wenigstens einer Drehfeder 17 vorhanden ist.

Der in Fig. 2 dargestellte Einkaufswagen 1 entspricht dem in Fig. 1 beschriebenen Einkaufswagen 1. Dessen Ablage 11 befindet sich ein Stück weit nach vorne geschwenkt in der Nichtgebrauchslage. Sowohl die Stützarme 14 als auch die Abstellfläche 12 sind nunmehr nach vorne geneigt angeordnet. Um zu vermeiden, dass die Ablage 11 nach vorne fällt, liegt deren Anschlag 16 an den Anschlagmitteln 8 an. Schwenkt man die Ablage 11 von Hand nach hinten in die Gebrauchslage und lässt man die Ablage 11 wieder los, kehrt diese von selbst zurück in ihre Nichtgebrauchslage.

Es ist für den Fachmann ein Leichtes, anstelle der am Korb 4 befindlichen Anschlagmittel 8 solche an geeigneten Stellen am Fahrgestell 2 anzubringen. Es ist auch möglich, die den Schwenkbereich der Ablage 11 bestimmenden Anschlagmittel 8 sowohl am Korb 4 als auch am Fahrgestell 2 anzubringen.

## Patentansprüche

1. Stapelbarer Einkaufswagen (1), mit einem Fahrgestell (2) und mit einem vom Fahrgestell (2) getragenen Korb (4) zur Aufnahme von Ware, mit einer Schiebeeinrichtung (3) und mit einer unterhalb der Schiebeeinrichtung (3) befindlichen, zum Abstellen weiterer Ware bestimmten, mit einer Abstellfläche (12) ausgestatteten Ablage (11), die sich um eine horizontale Schwenkachse (10) aus einer Nichtgebrauchslage nach rückwärts in eine Gebrauchslage und wieder zurück bewegen lässt, wobei die Abstellfläche (12) nach hinten durch einen Anschlag (16) begrenzt ist und wobei der Anschlag (16) höher und die Schwenkachse (10) tiefer angeordnet sind als die Abstellfläche (12), wobei der Schwenkbereich der Ablage (11) durch Anschlagmittel (8) bestimmt ist, die außerhalb der Abstellfläche (12) angeordnet am Fahrgestell (2) und/oder am Korb (4) vorgesehen sind, **dadurch gekennzeichnet, dass** Mittel beanspruchbar oder vorhanden sind, die auf die Ablage (11) so einwirken, dass die in Gebrauchslage befindliche Ablage (11) von selbst in die Nichtgebrauchslage schwenkt.

2. Einkaufswagen nach Anspruch 1, **dadurch gekennzeichnet, dass** das beanspruchbare Mittel durch die Gravitation gebildet ist, wobei die Lage des Schwerpunktes (S) der Ablage (11) in Bezug zur Schwenkachse (10) so gewählt ist, dass die in Gebrauchslage befindliche Ablage (11) bestrebt ist, von selbst in die Nichtgebrauchslage zu schwenken.

3. Einkaufswagen nach Anspruch 1, **dadurch gekennzeichnet, dass** das vorhandene Mittel durch wenigstens eine Drehfeder (17) gebildet ist, die beim Schwenken der Ablage (11) in die Gebrauchslage ein Energiepotential aufbaut und dass dieses Potential nach dem Loslassen der Ablage (11) zum Verschwenken der Ablage (11) in die Nichtgebrauchslage bereitgestellt wird.

4. Einkaufswagen nach einem der Ansprüche 1 bis 3, **dadurch gekennzeichnet, dass** die Ablage (11) zwei nach unten führende, um die Schwenkachse (10) verschwenkbare Stützarme (14) aufweist.

5. Einkaufswagen nach Anspruch 3, **dadurch gekennzeichnet, dass** das wenigstens eine als Drehfeder (17) gestaltete Mittel mit einem der beiden Stützarme (14) der Ablage (11) und mit einem am Fahrgestell (2) vorgesehenen Fixpunkt (18) verbunden ist.

6. Einkaufswagen nach Auspruch 4, **dadurch gekennzeichnet, dass** die Stützarme (14) der Ablage (11) nach vorne geneigt angeordnet sind.

7. Einkaufswagen nach einem der Ansprüche 1 bis 6, **dadurch gekennzeichnet, dass** der Schwerpunkt (S) der Ablage (11) höher liegt als die Schwenkachse (10) und in einem Abstand zur Schwenkachse (10) in Richtung vorderes Ende (20') des Einkaufswagens (1) gemessen angeordnet ist.

8. Einkaufswagen nach einem der Ansprüche 1 bis 7, **dadurch gekennzeichnet, dass** der vordere Rand (13) der Abstellfläche (12) nach oben geführt ist und in Gebrauchslage der Ablage (11) an den Anschlagmitteln (8) anliegt.

9. Einkaufswagen nach einem der Ansprüche 1 bis 8, **dadurch gekennzeichnet, dass** der Anschlag (16) der Ablage (11) in deren Nichtgebrauchslage an den Anschlagmitteln (8) anliegt.

## Revendications

1. Chariot libre-service (1) emboîtable, comprenant un châssis de roulement (2) et un panier (4) porté par ledit châssis de roulement (2), en vue de recevoir des marchandises ; un dispositif de poussée (3) et un reposoir (11) qui est situé au-dessous dudit dispositif de poussée (3), est destiné à recevoir d'autres marchandises, est équipé d'une surface réceptrice (12) et peut être déplacé vers l'arrière autour d'un axe horizontal de pivotement (10), d'une position de non-utilisation à une position d'utilisation, puis animé d'un mouvement de retour, sachant que la surface réceptrice (12) est limitée, vers l'arrière, par l'intermédiaire d'une butée (16), et sachant que ladite butée (16) et l'axe de pivotement (10) occupent, respectivement, une position plus haute et plus basse que ladite surface réceptrice (12), la plage de pivotement du reposoir (11) étant déterminée par des moyens de butée (8) qui, disposés à l'extérieur de la surface réceptrice (12), sont prévus sur le châssis de roulement (2) et/ou sur le panier (4), **caractérisé par le fait que** des moyens, présents ou sollicitables, agissent sur le reposoir (11) de façon telle que ledit reposoir (11), occupant la position d'utilisation, pivote de lui-même jusqu'à la position de non-utilisation.

2. Chariot libre-service selon la revendication 1, **caractérisé par le fait que** le moyen sollicitable est matérialisé par la gravitation, la position du centre de gravité (S) du reposoir (11), vis-à-vis de l'axe de pivotement (10), étant choisie de telle sorte que ledit reposoir (11), occupant la position d'utilisation, ait tendance à pivoter de lui-même vers la position de non-utilisation.

3. Chariot libre-service selon la revendication 1, **caractérisé par le fait que** le moyen présent est matérialisé par au moins un ressort de torsion (17) qui accumule un potentiel d'énergie lors du pivotement du reposoir (11) jusqu'à la position d'utilisation ; et **par le fait que** ce potentiel est mis à disposition, après le relâchement du reposoir (11), afin de faire pivoter ledit reposoir (11) vers la position de non-utilisation.

4. Chariot libre-service selon l'une des revendications 1 à 3, **caractérisé par le fait que** le reposoir (11) présente deux bras d'appui (14) dirigés vers le bas et pouvant pivoter autour de l'axe de pivotement (10).

5. Chariot libre-service selon la revendication 3, **caractérisé par le fait que** le moyen prévu au minimum, matérialisé par un ressort de torsion (17), est relié à l'un des deux bras d'appui (14) du reposoir (11), et à un point fixe (18) prévu sur le châssis de roulement (2).

6. Chariot libre-service selon la revendication 4, **caractérisé par le fait que** les bras d'appui (14) du reposoir (11) sont agencés avec inclinaison vers l'avant.

7. Chariot libre-service selon l'une des revendications 1 à 6, **caractérisé par le fait que** le centre de gravité (S) du reposoir (11) occupe une position plus haute que l'axe de pivotement (10) et se trouve, vis-à-vis dudit axe de pivotement (10), à une distance mesurée en direction de l'extrémité antérieure (20') du chariot libre-service (1).

8. Chariot libre-service selon l'une des revendications 1 à 7, **caractérisé par le fait que** le bord antérieur (13) de la surface réceptrice (12) est dirigé vers le haut, et est appliqué contre les moyens de butée (8) en position d'utilisation du reposoir (11).

9. Chariot libre-service selon l'une des revendications 1 à 8, **caractérisé par le fait que** la butée (16) du reposoir (11) est appliquée contre les moyens de butée (8) dans la position de non-utilisation dudit reposoir.

## Claims

1. A nestable shopping trolley (1) with a wheel frame (2) and with a basket (4), carried by the wheel frame (2), for holding goods, with a pushing means (3) and with a shelf (11) which is located below the pushing means (3) and is provided with a depositing surface (12) on which further goods may be deposited, and which is movable about a horizontal pivoting axis (10) rearwards from a position of non-use into a position of use and back again, wherein the depositing surface (12) is rearwardly limited by a stop (16) and wherein the stop (16) is arranged higher and the pivoting axis (10) is arranged lower than the depositing surface (12), and wherein the pivoting range of the shelf (11) is defined by stop means (8) arranged outside the depositing surface (12) and provided on the wheel frame (2) and/or on the basket (4), **characterised in that** means are available or provided which act on the shelf (11) so that, when the shelf (11) is in the position of use, it pivots by itself into the position of non-use.

2. A shopping trolley according to claim 1, **characterised in that** the available means is formed by gravitation, wherein the position of the centre of gravity (S) of the shelf (11) in relation to the pivoting axis (10) is selected so that, when the shelf (11) is in the position of use, it endeavours to pivot into the position of non-use by itself.

3. A shopping trolley according to claim 1, **characterised in that** the provided means is formed by at least one torsion spring (17) which builds up an energy potential when the shelf (11) is pivoted into the position of use, and **in that** this potential is available for pivoting the shelf (11) into the position of non-use after the shelf (11) has been released.

4. A shopping trolley according to any one of claims 1 to 3, **characterised in that** the shelf (11) has two downwardly extending supporting arms (14) which are pivotable about the pivoting axis (10).

5. A shopping trolley according to claim 3, **characterised in that** the at least one means formed as a torsion spring (17) is connected to one of the two supporting arms (14) of the shelf (11) and to a fixed point (18) on the wheel frame (2).

6. A shopping trolley according to claim 4, **characterised in that** the supporting arms (14) of the shelf (11) are arranged so as to be inclined forwards.

7. A shopping trolley according to any one of claims 1 to 6, **characterised in that** the centre of gravity (S) of the shelf (11) lies higher than the pivoting axis (10) and is arranged at a distance from the pivoting axis (10), measured in the direction of the front end (20') of the shopping trolley (1).

8. A shopping trolley according to any one of claims 1 to 7, **characterised in that** the front edge (13) of the depositing surface (12) extends upwards and rests against the stop means (8) when the shelf (11) is in the position of use.

9. A shopping trolley according to any one of claims 1 to 8, **characterised in that** the stop (16) of the shelf (11) rests against the stop means (8) when the shelf (11) is in the position of non-use.
